# EUROPEAN PATENT APPLICATION

(11) **EP 3 901 923 A1**
(43) Date of publication of application: **27.10.2021**
(21) Application number: 20170793.2
(22) Date of filing: 22.04.2020
(51) Int. Cl.: G07C 9/00

(54) **A METHOD AND VEHICLE DOOR LOCK SYSTEM FOR MANAGING ACCESS TO THE VEHICLE**

(71) Applicant: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: AXELSON, Gustaf, 426 76 VÄSTRA FRÖLUNDA (SE); JOHANSSON, Jonathan, 417 14 GÖTEBORG (SE)
(74) Representative: Zacco Sweden AB

(57) **Abstract**

The disclosure relates to a vehicle door lock system (100) of a vehicle (1), a portable electronic device (20) and a method for managing access to the vehicle (1). The vehicle door lock system (100) comprises: a door lock (5a,5b,5c,5d); a vehicle event sensor (10a,10b,10c,10d); and a processing circuitry (102a), the processing circuitry (102a,102b,102c) is configured to cause the vehicle door lock system (100) to generate first triggering event data (1TED), indicative of a first triggering event detected by the vehicle event sensor (10a,10b,10c,10d), caused by a knocking of an object onto the vehicle (1), at a first time (T1), obtain, from a portable electronic device (20), second triggering event data (2TED), indicative of a second triggering event caused by a knocking of the portable electronic device (20) onto an object, at a second time (T2), determine if the first triggering event and the second triggering event both occurs within a predetermined time period by comparing the first triggering event data (1TED) and the second triggering event data (2TED).

## Description

### Technical field

The present disclosure relates to a vehicle door lock system, a portable electronic device, a vehicle door lock server, a method and a computer program product for managing access to a vehicle.

### Background art

Access to a vehicle is traditionally controlled by a key that can unlock the vehicle doors and to turn the ignition on. In the past this key was a physical key, that had to fit into a physical mechanical lock at the vehicle. It has lately become more popular, or even common, to use a wireless key that can control access to a vehicle from a distance, in the vicinity, of the vehicle. The wireless key gives the user of a vehicle the possibility to remotely open the vehicle by e.g. pressing a button on a key fob. The wireless key is a digital key that is using access information that can be wirelessly transferred from the wireless key to the vehicle. In an example such wireless key use e.g. a wireless radio communication interface between the key and the vehicle. Common access control technologies for wireless keys are e.g. NFC, Bluetooth and UWB. There are also wireless keys that allow users to get access and start the vehicle while having the wireless key in the pocket without pressing any button etc. These so called passive keyless entry and start systems have been very popular since it is very convenient for the user of the vehicle.

### Summary

In some examples the wireless key for controlling access to a vehicle has in later developments been integrated into a portable electronic device such as a smartphone or a tablet. In some examples the portable electronic device supports technologies for wireless keys such as e.g. enabling NFC, Bluetooth and UWB for wireless access control.

A problem with a wireless key is that a wireless key transfers wireless key access information data wirelessly, and one risk that the inventors have identified is that the wireless key access information data that is transferred wirelessly between the wireless key and the vehicle can be listen in to by another wireless device and picked up by a non-trusted person, an "attacker". The attacker can then use the picked up wireless key access information data to gain access to the vehicle by using a non-trusted device that is mirroring the wireless key access information data.

There is also a risk of a so-called relay attack where, typically, an attacker intercepts and manipulates communications between the wireless key and the vehicle. Wireless key access information data from the vehicle, intended to the wireless key, can be picked up and be manipulated by the attacker and sent to a friend of the attacker that is close to the user of the vehicle that, at the same, time can be far away from the vehicle. The friend to the attacker is close enough to the true wireless keys to forward the wireless key access information data from the vehicle to the wireless key, that is e.g. carried by the user of the vehicle. The wireless key responds, and the response wireless key access information data is relayed from a wireless device of the attacker's friend, that is close to the user of the vehicle carrying the wireless key, to the attacker that is close to the vehicle in order to gain access to the vehicle by use of a non-trusted device.

The inventors have realised that security can be enhanced by adding a further identification of a trusted device to avoid that a non-trusted device is given access to the vehicle. The inventors have come up with the idea of a need for a physical contact with the vehicle by the trusted device, such as a smartphone, that can e.g. in addition to the wireless key access information data, verify that the trusted device is in the vicinity of the vehicle and not far away from the vehicle.

One advantage with the verification is that relay attacks can be avoided since a non-trusted device will not be allowed to access the vehicle even if the non-trusted device has the wireless key access information data needed to be communicated between the wireless key and the vehicle.

It is an object of the present disclosure to mitigate, alleviate or eliminate one or more of the above-identified deficiencies and disadvantages in the prior art and solve at least the above mentioned problem.

According to a first aspect there is provided a vehicle door lock system of a vehicle for managing access to the vehicle. The vehicle door lock system comprises a door lock, a vehicle event sensor, and a processing circuitry operatively connected to the door lock and the vehicle event sensor. The processing circuitry is configured to cause the vehicle door lock system to generate first triggering event data, indicative of a first triggering event detected by the vehicle event sensor, caused by a knocking of an object onto the vehicle, at a first time, and obtain, from a portable electronic device, second triggering event data, indicative of a second triggering event caused by a knocking of the portable electronic device onto an object, at a second time. The processing circuitry is further configured to cause the vehicle door lock system to determine if the first triggering event and the second triggering event both occurs within a predetermined time period by comparing the first triggering event data and the second triggering event data, and in accordance with a determination that the first triggering event and the second triggering event both occurs within the predetermined time period, grant access to the vehicle by enable unlocking of the door lock.

One advantage with this aspect is that if the first triggering event and the second triggering event occurs more or less at the same time it can be verified that it is the knocking by the portable electronic device onto the vehicle that has caused the generation of the first and the second triggering event data, which in turn verifies that the portable electronic device is in the vicinity of the vehicle.

According to a second aspect there is provided a portable electronic device for managing access to a vehicle, the portable electronic device comprises a portable electronic device event sensor and a processing circuitry operatively connected to the portable electronic device event sensor. The processing circuitry is configured to cause the portable electronic device to generate second triggering event data, indicative of a second triggering event detected by the portable electronic device event sensor, caused by a knocking of the portable electronic device onto an object, at a second time, and obtain, from a vehicle door lock system of a vehicle, first triggering event data, indicative of a first triggering event caused by a knocking of an object onto the vehicle at a first time. The processing circuitry is further configured to cause the portable electronic device to determine if the first triggering event and the second triggering event both occurs within a predetermined time period by comparing the first triggering event data and the second triggering event data, and in accordance with a determination that the first triggering event and the second triggering event both occurs within the predetermined time period, grant access to the vehicle by generating an access granting data message, indicative of granting access to the vehicle.

One advantage with this aspect is that if the first triggering event and the second triggering event occurs more or less at the same time it can be verified that it is the knocking by the portable electronic device onto the vehicle that has caused the generation of the first and the second triggering event data, which in turn verifies that the portable electronic device is in the vicinity of the vehicle.

According to some embodiments, the processing circuitry is further configured to cause the portable electronic device to send the access granting data message to a vehicle door lock system of the vehicle via a communication network for managing access to the vehicle.

One advantage with this embodiment is that the portable electronic device is used for determining access to the vehicle and according to some embodiments the vehicle door lock system will not grant access to the vehicle until the access granting data message from the portable electronic is received by the vehicle door lock system.

According to some embodiments, the first triggering event data and/or the second triggering event data is generated by any of, or a combination of, a detection of a sound and/or a detection of a movement.

One advantage with this embodiment is that event data can be generated by a detected sound and/or a detected movement, and according to some embodiments the event data can hence be dependent on a function dependent by a combination of a detected sound and a detected movement.

According to some embodiments, the vehicle event sensor and/or the portable electronic device event sensor is configured to detect any of a sound and/or a movement.

One advantage with this embodiment is that the vehicle door lock system and the portable electronic device can, by the vehicle event sensor and the portable electronic device event sensor respectively, detect the same sound and/or a movement caused by a knocking of the portable electronic device onto the vehicle.

According to a third aspect there is provided a vehicle door lock server for managing access to vehicle, the vehicle door lock server comprises a processing circuitry operatively connected to a vehicle door lock system and a portable electronic device, the processing circuitry is configured to cause the vehicle door lock server to obtain, from the vehicle door lock system of a vehicle, first triggering event data, indicative of a first triggering event caused by a knocking of an object onto the vehicle at a first time, and obtain, from the portable electronic device, second triggering event data, indicative of a second triggering event caused by a knocking of the portable electronic device onto the vehicle, at a second time. The processing circuitry is further configured to cause the vehicle door lock server to determine if the first triggering event and the second triggering event both occurs within a predetermined time period by comparing the first triggering event data and the second triggering event data, and in accordance with a determination that the first triggering event and the second triggering event both occurs within the predetermined time period, grant access to the vehicle by generating an access granting data message, indicative of granting access to the vehicle.

One advantage with this aspect is that if the first triggering event and the second triggering event occurs more or less at the same time it can be verified that it is the knocking by the portable electronic device onto the vehicle that has caused the generation of the first and the second triggering event data, which in turn verifies that the portable electronic device is in the vicinity of the vehicle.

According to some embodiments, the processing circuitry is further configured to cause the vehicle door lock server to send the access granting data message to a vehicle door lock system of the vehicle via a communication network for managing access to the vehicle.

One advantage with this embodiment is that vehicle door lock server is used for determining access to the vehicle and according to some embodiments the vehicle door lock system will not grant access to the vehicle until the access granting data message from the vehicle door lock server is received by the vehicle door lock system.

According to a fourth aspect there is provided a method for managing access to the vehicle, the method comprising: obtaining, from a vehicle door lock system of a vehicle, first triggering event data, indicative of a first triggering event caused by a knocking of an object onto the vehicle at a first time, and obtaining, from a portable electronic device, second triggering event data, indicative of a second triggering event caused by a knocking of the portable electronic device onto an object, at a second time. The method further comprising the step of determining if the first triggering event and the second triggering event both occurs within a predetermined time period by comparing the first triggering event data and the second triggering event data, and in accordance with a determination that the first triggering event and the second triggering event both occurs within the predetermined time period, granting access to the vehicle.

One advantage with this aspect is that if the first triggering event and the second triggering event occurs more or less at the same time it can be verified that it is the knocking by the portable electronic device onto the vehicle that has caused the generation of the first and the second triggering event data, which in turn verifies that the portable electronic device is in the vicinity of the vehicle.

According to some embodiments, the granting of access to the vehicle comprises enabling unlocking of a door lock.

One advantage with this embodiment is that access to a vehicle can be denied by keeping a vehicle door locked and only provide access by unlocking the door lock.

According to some embodiments, the granting of access to the vehicle comprises generating an access granting data message, indicative of granting access to the vehicle.

One advantage with this embodiment is that the access granting data message can be sent to the vehicle door lock system for e.g. unlocking a door and/or enabling ignition to a user of the vehicle.

According to some embodiments, the method further comprises sending the access granting data message to a vehicle door lock system via a communication network for managing access to the vehicle.

One advantage with this embodiment is that the access granting data message can be sent to the vehicle door lock system from a remote device such as a portable electronic device or a remote server.

According to some embodiments, the first triggering event data is generated based on a first triggering event detected by a vehicle event sensor of the vehicle door lock system.

One advantage with this embodiment is that the vehicle door lock system can, by the vehicle event sensor, detect sound and/or a movement caused by a knocking of the portable electronic device onto the vehicle.

According to some embodiments, the second triggering event data is generated based on a second triggering event detected by a portable electronic device event sensor of the portable electronic device.

One advantage with this embodiment is that the portable electronic device can, by the portable electronic device event sensor, detect sound and/or a movement caused by a knocking of the portable electronic device onto the vehicle.

According to some embodiments, the first triggering event data further comprises a first triggering event sensor fingerprint data indicative of sensor data obtained by the vehicle event sensor and the second triggering event data further comprises a second triggering event sensor fingerprint data indicative of sensor data obtained by a portable electronic device event sensor, and the granting of access to the vehicle is further dependent on comparing sensor fingerprint data and in accordance with a determination that the first triggering event sensor fingerprint data is correlated with the second triggering event sensor fingerprint data, grant access to the vehicle.

One advantage with this embodiment is that triggering event sensor fingerprint data can e.g. be a sequence or pattern of knocks, or a certain knocking rhythm, or different sound or movement intensity of plural knocks which can make the knocking individual.

According to a fifth aspect there is provided a computer program product comprising a non-transitory computer readable medium, having thereon a computer program comprising program instructions, the computer program being loadable into a processing circuitry and configured to cause execution of the method when the computer program is run by the at least one processing circuitry.

Effects and features of the second through fifth aspects are to a large extent analogous to those described above in connection with the first aspect. Embodiments mentioned in relation to the first aspect are largely compatible with the second through fifth aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figures 1a and 1b illustrates a vehicle door lock system, a portable electronic device and a vehicle door lock server according to an embodiment of the present disclosure.
Figure 2 illustrates an example graph visualizing triggering event data over time.
Figure 3 illustrates an example flow of triggering event data and access granting data between the vehicle door lock system, the portable electronic device and the vehicle door lock server.
Figure 4 illustrates a flow chart of the method steps according to the fourth aspect of the disclosure.
Figure 5 illustrates a computer program product according to the fifth aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

Access to a vehicle is traditionally controlled by a key that can unlock the vehicle doors and to turn the ignition on. In the past this key was a physical key, that had to fit into a physical mechanical lock at the vehicle. It has lately become more popular, or even common, to use a wireless key that can control access to a vehicle from a distance, in the vicinity, of the vehicle. A wireless key is a digital key that is using access information that can be wirelessly transferred from the wireless key to the vehicle. In an example such wireless key use e.g. a wireless radio communication interface between the key and the vehicle. Common access control technologies for wireless keys are e.g. NFC, Bluetooth and UWB. In some examples the wireless key for controlling access to a vehicle has in later developments been integrated into a portable electronic device such as a smartphone or a tablet. In some examples the portable electronic device supports technologies for a wireless keys such as e.g. enabling NFC, Bluetooth and UWB for wireless access control.

A problem with a wireless key that a wireless key transfers wireless key access information data wirelessly, and one risk that the inventors have identified is that the wireless key access information data that is transferred wirelessly between the wireless key and the vehicle can be listen in to by another wireless device and picked up by a non-trusted person, an "attacker". The attacker can then use the picked up wireless key access information data to gain access to the vehicle by using a non-trusted device that is mirroring the "stolen" wireless key access information data.

The inventors have realised that security can be enhanced by adding a further verification that the portable electronic device that is used as a wireless key, or together with a wireless key, is a trusted portable electronic device that is in the vicinity of the vehicle in order to minimize manipulation of access control to a vehicle to enhance the security.

The inventors have come up with the idea of a need for a physical contact with the vehicle by the portable electronic device to verify that the portable electronic device is a trusted portable electronic device that is in the vicinity of the vehicle when access to the vehicle is to be granted. In an example, the wireless key access information data comprised in the portable electronic device together with the verification that the portable electronic device is in the vicinity of the vehicle is used for granting access to the vehicle. In an example the portable electronic device is considered trusted only if the portable electronic device can be verified as the portable electronic device in the vicinity of the vehicle.

One advantage with this verification is that relay attacks can be avoided since a non-trusted device will not be allowed to access the vehicle even if the non-trusted device has the wireless key access information data needed to be communicated between the wireless key and the vehicle.

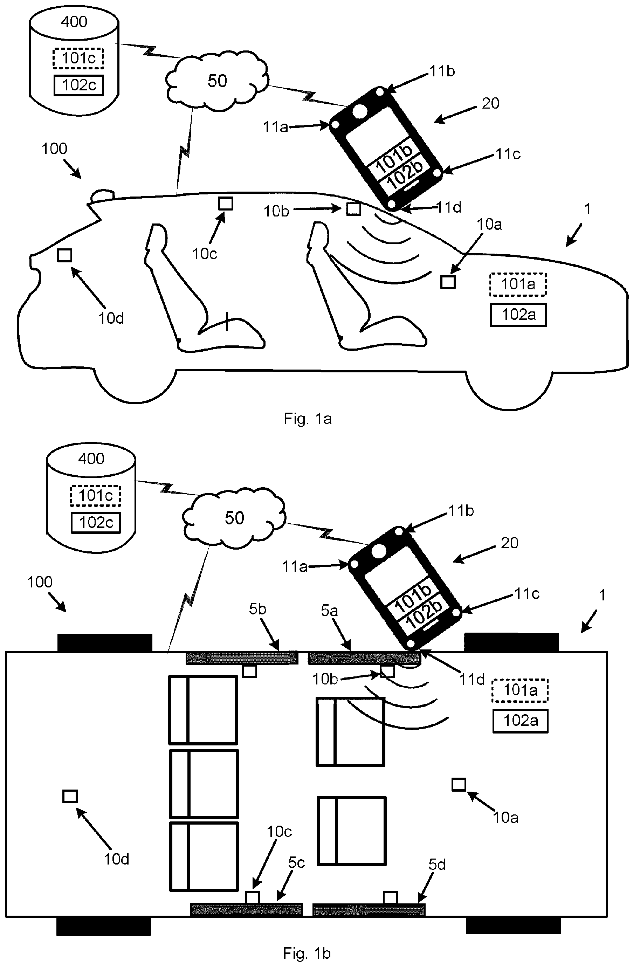

Figures 1a and 1b illustrates a vehicle door lock system 100, a portable electronic device 20 and a vehicle door lock server 400 according to an embodiment of the present disclosure.

Figures 1a and 1b illustrates an example knocking of the portable electronic device 20 onto the vehicle 1. In the example the portable electronic device 20 is knocking at the window of the door to driver seat of the vehicle 1. In the example the knocking of the portable electronic device 20 at the window of the vehicle 1 causes a sound and vibration at both the vehicle 1 and at the portable electronic device 20 within a very short time period, that is more or less at the same time.

The first aspect of this disclosure, as illustrated in Figures 1a and 1b, shows a vehicle door lock system 100 of a vehicle 1 for managing access to the vehicle 1. The vehicle door lock system 100 comprises a door lock 5a,5b,5c,5d. The illustration in Figures 1a and 1b exemplifies door locks 5a,5b,5c,5d at the four doors of the vehicle. According to some embodiments the door lock 5a,5b,5c,5d can be any door lock such as a door lock at the hood, the fuel cap, the sunroof or the tailgate door of the vehicle 1. The vehicle door lock system 100 further comprises a vehicle event sensor 10a,10b,10c,10d and a processing circuitry 102a operatively connected to the door lock 5a,5b,5c,5d and the vehicle event sensor 10a,10b,10c,10d.

The processing circuitry 102a,102b,102c is configured to cause the vehicle door lock system 100 to generate first triggering event data 1TED, indicative of a first triggering event detected by the vehicle event sensor 10a,10b,10c,10d, caused by a knocking of an object onto the vehicle 1, at a first time T1 and obtain, from a portable electronic device 20, second triggering event data 2TED, indicative of a second triggering event caused by a knocking of the portable electronic device 20 onto an object, at a second time T2. The processing circuitry is further configured to cause the vehicle door lock system to determine if the first triggering event and the second triggering event both occurs within a predetermined time period by comparing the first triggering event data 1TED and the second triggering event data 2TED; and in accordance with a determination that the first triggering event and the second triggering event both occurs within the predetermined time period, grant access to the vehicle 1 by enable unlocking of the door lock 5a,5b,5c,5d.

According to some embodiments access to the vehicle 1 is only granted if the portable electronic device 20 is a trusted portable electronic device. According to some embodiments second triggering event data 2TED further comprising identification data of the portable electronic device 20. According to some embodiments the vehicle door lock system 100 is configured to determine if the portable electronic device 20 is a trusted portable electronic device based on the identification data of the portable electronic device 20.

According to some embodiments the trusted portable electronic device is the portable electronic device 20 that is associated with the wireless key access information data used as the wireless key for getting access to the vehicle 1.

In an example a user of the vehicle 1 wants to get access to the vehicle 1, and in order to verify that the portable electronic device 20 comprising the wireless key access information data is a trusted portable electronic device, the user knocks the portable electronic device 20 onto the vehicle 1.

According to some embodiments the trusted portable electronic device is the portable electronic device 20 that is associated with the wireless key access information data used by the wireless key for getting access to the vehicle 1 wherein the wireless key is a standalone wireless key device that is separated from the portable electronic device 20 but both the wireless key device and the portable electronic device 20 are required to be within a predetermined distance from the vehicle door lock system 100 of the vehicle 1 in order to grant access to the vehicle 1. According to some embodiments the portable electronic device 20 and the wireless key device are configured to be operatively wirelessly connected to the vehicle door lock system 100.

According to some embodiments the trusted portable electronic device is the portable electronic device 20 that is associated with the wireless key access information data used by the wireless key for getting access to the vehicle 1 and the wireless key is an integrated part of the portable electronic device 20 and the portable electronic device 20 is required to be within a predetermined distance from the vehicle door lock system 100 of the vehicle 1 in order to grant access to the vehicle 1.

According to some embodiments the vehicle event sensor 10a,10b,10c,10d detects the knocking of the portable electronic device 20 onto the vehicle 1.

According to some embodiments the first triggering event data 1TED comprising time stamp data of the time when the first triggering event was detected by the vehicle event sensor 10a, 10b, 10c, 10d.

According to some embodiments the processing circuitry 102a,102b,102c is configured to generate the first triggering event data 1TED together with a time stamp data, indicative of when the first triggering event detected by the vehicle event sensor 10a,10b,10c,10d.

One advantage with this aspect is that if the first triggering event and the second triggering event occurs more or less at the same time it can be verified that it is the knocking by the portable electronic device 20 onto the vehicle 1 that has caused the generation of the first and the second triggering event data 1TED, 2TED, which in turn verifies that the portable electronic device 20 is in the vicinity of the vehicle 1.

According to some embodiments the processing circuitry is further configured to cause the vehicle door lock system to compare the first triggering event data 1TED and the second triggering event data 2TED to determine if it is the same sound and/or the same movement that has caused the generation of the first triggering event data 1TED and the second triggering event data 2TED.

According to some embodiments the vehicle door lock system 100 further comprises a memory 101a configured to store data.

According to some embodiments the vehicle door lock system 100 is operatively connected the portable electronic device 20 and/or a vehicle door lock server 400 via a communication network 50.

According to some embodiments the communication network 50 is a wireless communication network. According to some embodiments the wireless communication network is a standardized wireless local area network such as a Wireless Local Area Network, WLAN, Bluetooth™, ZigBee, Ultra-Wideband, UWB, Radio Frequency Identification, RFID, or similar network. According to some embodiments the wireless communication network is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. According to some embodiments the wireless communication network can also be a combination of both a wireless local area network and a wireless wide area network. According to some embodiments communication network 50 can be a combination a wired communication network and a wireless communication network. According to some embodiments the communication network is defined by common Internet Protocols.

The second aspect of this disclosure shows a portable electronic device 20 for managing access to a vehicle 1. Figures 1a and 1b illustrates a portable electronic device 20, a vehicle door lock system 100 and a vehicle door lock server 400 according to an embodiment of the present disclosure. Figures 1a and 1b illustrates an example knocking of the portable electronic device 20 onto the vehicle 1.

The portable electronic device 20 comprises a portable electronic device event sensor 11a,11b,11c,11d, a processing circuitry 102b operatively connected to the portable electronic device event sensor 11a,11b,11c,11d, the processing circuitry 102b is configured to cause the portable electronic device 20 to generate second triggering event data 2TED, indicative of a second triggering event detected by the portable electronic device event sensor 11a,11b,11c,11d, caused by a knocking of the portable electronic device 20 onto an object, at a second time T2 and obtain, from a vehicle door lock system 100 of a vehicle 1, first triggering event data 1TED, indicative of a first triggering event caused by a knocking of an object onto the vehicle 1 at a first time T1. The processing circuitry is further configured to cause the portable electronic device to determine if the first triggering event and the second triggering event both occurs within a predetermined time period by comparing the first triggering event data 1TED and the second triggering event data 2TED, and in accordance with a determination that the first triggering event and the second triggering event both occurs within the predetermined time period, grant access to the vehicle 1 by generating an access granting data message AGDm, indicative of granting access to the vehicle 1.

According to some embodiments access to the vehicle 1 is only granted if the portable electronic device 20 is a trusted portable electronic device. According to some embodiments second triggering event data 2TED further comprising identification data of the portable electronic device 20.

In an example a user of the vehicle 1 wants to get access to the vehicle 1, and in order to verify that the portable electronic device 20 comprising the wireless keys is a trusted portable electronic device, the user knocks the portable electronic device 20 onto the vehicle 1.

According to some embodiments the portable electronic device event sensor 11a, 11b, 11c, 11d, detects the knocking of the portable electronic device 20 onto the vehicle 1.

According to some embodiments the second triggering event data 2TED comprising time stamp data of the time when the second triggering event was detected by the portable electronic device event sensor 11a, 11b, 11c, 11d.

According to some embodiments the processing circuitry 102a,102b,102c is configured to generate the second triggering event data 2TED together with a time stamp data, indicative of when the second triggering event was detected by the portable electronic device event sensor 11a, 11b, 11c, 11d.

One advantage with this aspect is that if the first triggering event and the second triggering event occurs more or less at the same time it can be verified that it is the knocking by the portable electronic device 20 onto the vehicle 1 that has caused the generation of the first and the second triggering event data 1TED, 2TED, which in turn verifies that the portable electronic device 20 is in the vicinity of the vehicle 1.

According to some embodiments the portable electronic device 20 further comprises a memory 101b configured to store data.

According to some embodiments the portable electronic device 20 is operatively connected vehicle door lock system 100 and/or a vehicle door lock server 400 via the communication network 50.

According to some embodiments the processing circuitry 102b is further configured to cause the portable electronic device 20 to send the access granting data message AGDm to a vehicle door lock system 100 of the vehicle 1 via the communication network 50 for managing access to the vehicle 1.

One advantage with this embodiment is that the portable electronic device 20 is used for determining access to the vehicle 1 and according to some embodiments the vehicle door lock system 100 will not grant access to the vehicle 1 until the access granting data message AGDm from the portable electronic 20 is received by the vehicle door lock system 100.

According to some embodiments the access granting data message AGDm is received at the vehicle door lock system 100 of the vehicle 1, and in accordance with that acceptable wireless key access information is transferred between the portable electronic device 20 and the vehicle door lock system 100, access to the vehicle 1 is granted by enable unlocking of the door lock 5a, 5b, 5c, 5d and/or by enable the ignition of the vehicle 1 to be turned on.

According to some embodiments the first triggering event data 1TED and/or the second triggering event data 2TED is generated by any of, or a combination of, a detection of a sound and/or a detection of a movement.

One advantage with this embodiment is that triggering event data can be generated by a detected sound and/or a detected movement, and according to some embodiments the triggering event data can hence be dependent on a function dependent by a combination of a detected sound and a detected movement.

According to some embodiments the triggering event data TED is described by a function dependent on at least any of a detected sound s and a detected movement m(x,y,z). According to some embodiments the triggering event data TED is described by a function dependent a detected sound s and a detected movement m(x,y,z) e.g. TED=as+bm(x,y,z)

According to some embodiments the vehicle event sensor 10a,10b,10c,10d and/or the portable electronic device event sensor 11a,11b,11c,11d is configured to detect any of a sound and/or a movement.

In the example as illustrated in Figures 1a and 1b the knocking of the portable electronic device 20 at the window of the vehicle 1 causes a sound and vibration at both the vehicle 1 and at the portable electronic device 20 more or less at the same time.

According to some aspects, the knocking of an object onto the vehicle 1, at a first time T1 corresponds to the knocking of the portable electronic device 20 onto an object, at a second time T2. According to some aspects the first first time T1 is equal to second time T2.

According to some embodiments sound and/or vibrations generated by the knocking of the portable electronic device 20 at the vehicle 1 are detected by the vehicle event sensor 10a,10b,10c,10d and the portable electronic device event sensor 11a,11b,11c,11d within a very short time period that is defined by the speed of sound and/or the speed of vibrations from the location of the knocking of the portable electronic device 20 at the window to the vehicle event sensor 10a,10b,10c,10d and the portable electronic device event sensor 11a,11b,11c,11d. In an example this time is more or less the same, within milliseconds.

According to some embodiments the predetermined time period is between 1-50 milliseconds. According to some embodiments the predetermined time period is between 1-2 seconds. According to some embodiments the predetermined time period is determined by the speed of sound and the distance from a surface at the vehicle to the vehicle event sensor 10a, 10b, 10c, 10d and/or the portable electronic device event sensor 11a, 11b, 11c, 11d.

One advantage with this embodiment is that the vehicle door lock system 100 and the portable electronic device can 20, by the vehicle event sensor 10a,10b,10c,10d and the portable electronic device event sensor 11a,11b,11c,11d respectively, detect the same sound and/or a movement caused by a knocking of the portable electronic device onto the vehicle.

According to some embodiments the vehicle event sensor 10a,10b,10c,10d and/or the portable electronic device event sensor 11a,11b,11c,11d is any of a microphone, an accelerometer or a gyro.

According to some embodiments the vehicle event sensor 10a,10b,10c,10d is arranged at the vehicle 1 to detect any of a sound and/or a movement caused by knocking of an object onto any surface of the vehicle 1.

According to some embodiments the portable electronic device event sensor 11a,11b,11c,11d is arranged at the portable electronic device 20 to detect any of a sound and/or a movement caused by knocking of the portable electronic device 20 onto any object.

In the Figures 1a and 1b vehicle event sensors 10a,10b,10c,10d are arranged in the front center of the vehicle 1, e.g. at the windshield, at the doors and in the back center of the vehicle 1. In the Figures 1a and 1b portable electronic device event sensor 11a,11b,11c,11d are arranged at the corners of the portable electronic device 20.

The third aspect of this disclosure shows a vehicle door lock server 400 for managing access to vehicle 1. Figures 1a and 1b illustrates a vehicle door lock server 400, a portable electronic device 20 and a vehicle door lock system 100 according to an embodiment of the present disclosure. The vehicle door lock server 400 comprises a processing circuitry 102c operatively connected to a vehicle door lock system 100 and a portable electronic device 20, the processing circuitry 102c is configured to cause the vehicle door lock server 400 to obtain, from the vehicle door lock system 100 of a vehicle 1, first triggering event data 1TED, indicative of a first triggering event caused by a knocking of an object onto the vehicle 1 at a first time T1 and obtain, from the portable electronic device 20, second triggering event data 2TED, indicative of a second triggering event caused by a knocking of the portable electronic device 20 onto the vehicle 1, at a second time T2. The processing circuitry 102c is further configured to cause the vehicle door lock server 400 to determine if the first triggering event and the second triggering event both occurs within a predetermined time period by comparing the first triggering event data 1TED and the second triggering event data 2TED, and in accordance with a determination that the first triggering event and the second triggering event both occurs within the predetermined time period, grant access to the vehicle 1 by generating an access granting data message AGDm, indicative of granting access to the vehicle 1.

According to some embodiments access to the vehicle 1 is only granted if the portable electronic device 20 is a trusted portable electronic device. According to some embodiments second triggering event data 2TED further comprising identification data of the portable electronic device 20. According to some embodiments vehicle door lock server 400 is configured to determine if the portable electronic device 20 is a trusted portable electronic device based on the identification data of the portable electronic device 20.

One advantage with this aspect is that if the first triggering event and the second triggering event occurs more or less at the same time it can be verified that it is the knocking by the portable electronic device onto the vehicle that has caused the generation of the first and the second triggering event data, which in turn verifies that the portable electronic device is in the vicinity of the vehicle.

According to some embodiments the vehicle door lock server 400 further comprises a memory 101c configured to store data.

According to some embodiments the vehicle door lock server 400 is operatively connected vehicle door lock system 100 and/or the portable electronic device 20 via the communication network 50.

According to some embodiments the processing circuitry 102c is further configured to cause the vehicle door lock server 400 to send the access granting data message AGDm to a vehicle door lock system 100 of the vehicle 1 via a communication network 50 for managing access to the vehicle 1.

One advantage with this embodiment is that vehicle door lock server is used for determining access to the vehicle and according to some embodiments the vehicle door lock system will not grant access to the vehicle until the access granting data message from the vehicle door lock server is received by the vehicle door lock system.

According to some embodiments any of the vehicle door lock server 400, the vehicle door lock system 100, and/or the portable electronic device 20 is configured to be operatively connected with any vehicle lock system to enhance security for managing access to a vehicle. In an example the any of the vehicle door lock server 400, the vehicle door lock system 100, and/or the portable electronic device 20 is configured to be operatively connected to an onboard computer system to enhance security to an existing vehicle lock system.

According to some embodiments the portable electronic device 20 for managing access to a vehicle 1 is associated with any of the vehicle door lock server 400 and the vehicle door lock system 100, as a trusted portable electronic device during a secure setup procedure. In an example a user to the vehicle 1 can access the any of the vehicle door lock server 400 and the vehicle door lock system 100 via user account and verify that the portable electronic device 20 is a trusted portable electronic device. In an example, further portable electronic devices can be added as trusted portable electronic devices and used for managing access to a vehicle 1. According to some embodiments a trusted portable electronic device can add a further portable electronic devices as a trusted portable electronic device to be used for managing access to a vehicle 1.

According to some embodiments any of the vehicle door lock server 400, the vehicle door lock system 100, and/or the portable electronic device 20 is configured to be temporarily activated, during a predefined time period, for a temporary trusted portable electronic device of a user for enhancing security of managing access to the vehicle 1. In an example the any of the vehicle door lock server 400, the vehicle door lock system 100, and/or the portable electronic device 20 is configured to be temporarily activated for a temporary trusted portable electronic device of a user of a rental vehicle for enhancing security of managing access to the rental vehicle.

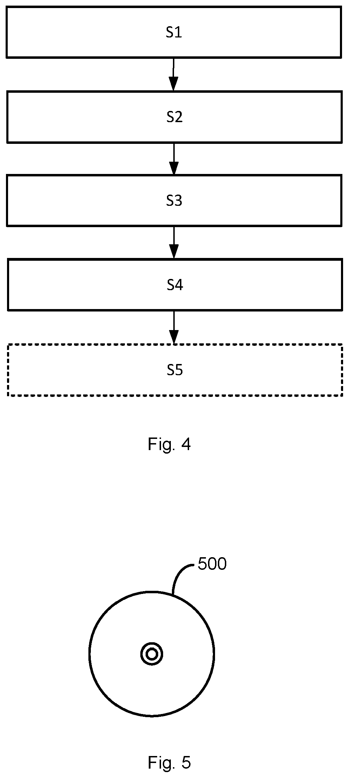

The fourth aspect of this disclosure shows a method for managing access to the vehicle 1. Figure 4 illustrates a flow chart of the method steps according to the fourth aspect of the disclosure. The method comprising S1 obtaining, from a vehicle door lock system 100 of a vehicle 1, first triggering event data 1TED, indicative of a first triggering event caused by a knocking of an object onto the vehicle 1 at a first time T1, the step of S2 obtaining, from a portable electronic device 20, second triggering event data 2TED, indicative of a second triggering event caused by a knocking of the portable electronic device 20 onto an object, at a second time T2, the step of S3 determining if the first triggering event and the second triggering event both occurs within a predetermined time period by comparing the first triggering event data 1TED and the second triggering event data 2TED, and the step of S4 in accordance with a determination that the first triggering event and the second triggering event both occurs within the predetermined time period, granting access to the vehicle 1.

One advantage with this aspect is that if the first triggering event and the second triggering event occurs more or less at the same time it can be verified that it is the knocking by the portable electronic device onto the vehicle that has caused the generation of the first and the second triggering event data, which in turn verifies that the portable electronic device is in the vicinity of the vehicle.

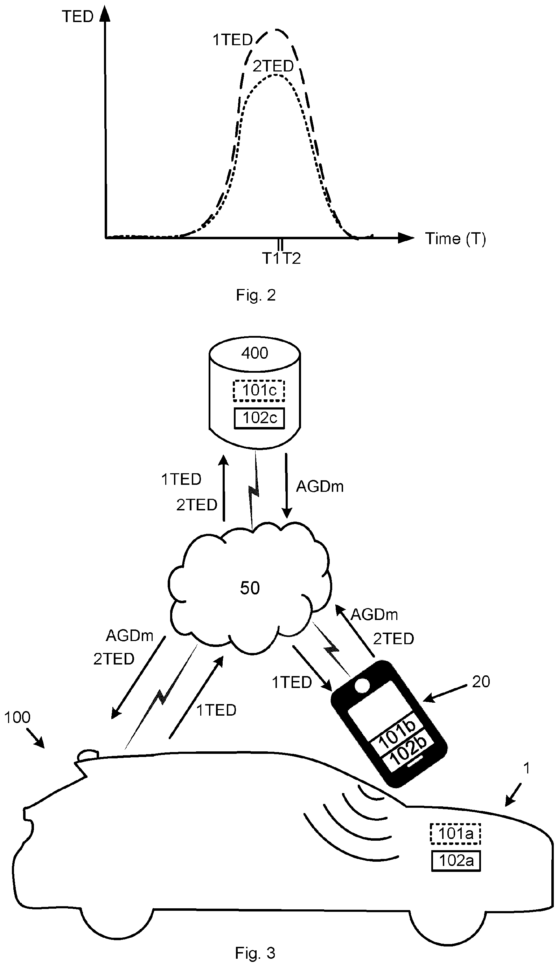

Figure 2 illustrates an example graph visualizing triggering event data over time. In the example in Figure 2 the first triggering event occurs at time T1. In the example the first triggering event data 1TED comprising the time stamp data T1 of the time when the first triggering event was detected by the vehicle event sensor 10a, 10b, 10c, 10d. In the same example in Figure 2 the second triggering event occurs at time T2. In the example the second triggering event data 2TED comprising time stamp data T2 of the time when the second triggering event was detected by the portable electronic device event sensor 11a, 11b, 11c, 11d. In the example as illustrated in Figure 2 a sound is generated caused by a knocking of the portable electronic device 20 onto the vehicle 1. In the example as illustrated in Figure 2 the first triggering event data 1TED is described by a curve illustrating the first triggering event data 1TED over time, and at time T1 the knock peaks in amplitude and it is determined that a first triggering event occurred at this point in time. In the example as illustrated in Figure 2 the second triggering event data 2TED is also described by a curve illustrating the second triggering event data 2TED over time, and at time T2 the knock peaks in amplitude and it is determined that a second triggering event occurred at this point in time. By determining that the first triggering event and the second triggering event both occurred within a predetermined time, illustrated in Figure 2 by the short distance between T1 and T2, it is determined that the first triggering event and the second triggering event was caused by the same knocking of the portable electronic device 20 onto the vehicle 1.

If for example a user knocks with the hand onto the vehicle 1, the vehicle door lock system may generate a first triggering event data 1TED, indicative of a first triggering event detected by the vehicle event sensor 10a, 10b, 10c, 10d, caused by the knocking of the hand onto the vehicle 1 at a first time T1. However, this knocking of the hand onto the vehicle 1 may not cause the portable electronic device 20 to generate a second triggering event data 2TED, since the portable electronic device event sensor 11a, 11b, 11c, 11d, may not detect the nocking of the hand onto the vehicle 1. In an example the portable electronic device event sensor 11a, 11b, 11c, 11d, may instead generate second triggering event data 2TED, indicative of a second triggering event detected by the portable electronic device event sensor 11a, 11b, 11c, 11d, caused by putting the portable electronic device 20 onto a table at a second time T2. The two events, knocking of the hand onto the vehicle 1 at a first time T1 and putting the portable electronic device 20 onto a table at a second time T2 will then occur at a time that is outside of the predetermined time period, and hence access to the vehicle 1 will not be given.

According to some embodiments any of the vehicle door lock server 400, the vehicle door lock system 100, and/or the portable electronic device 20 is configured to carry out the steps of the disclosed method.

Figure 3 illustrates an example flow of triggering event data and access granting data between the vehicle door lock system, the portable electronic device and the vehicle door lock server.

In an example embodiment, with reference to the Figure 3, when the portable electronic device 20 is used for managing access to a vehicle 1, the first triggering event data 1TED is obtained from a vehicle door lock system 100 of a vehicle 1 e.g. via the communication network 50. In the example, in accordance with a determination that the first triggering event and the second triggering event both occurs within the predetermined time period, access to the vehicle is granted 1 by generating an access granting data message AGDm, indicative of granting access to the vehicle 1, that is then send from the portable electronic device 20 to the vehicle door lock system 100 via the communication network 50.

In an example embodiment, with reference to the Figure 3, when vehicle door lock server 400 is used for managing access to a vehicle 1, the first triggering event data 1TED is obtained from the vehicle door lock system 100 of the vehicle 1 e.g. via the communication network 50. Further, the second triggering event data 2TED is obtained from the the portable electronic device 20 e.g. via the communication network 50. In the example, in accordance with a determination that the first triggering event and the second triggering event both occurs within the predetermined time period, access to the vehicle is granted 1 by generating an access granting data message AGDm, indicative of granting access to the vehicle 1, that is then send from vehicle door lock server 400 to the vehicle door lock system 100 via the communication network 50.

According to some embodiments wherein the granting of access to the vehicle 1 the method comprises enabling unlocking of a door lock 5a,5b,5c,5d.

One advantage with this embodiment is that access to a vehicle can be denied by keeping a vehicle door locked and only provide access by unlocking the door lock.

According to some embodiments granting of access to the vehicle 1 comprises generating an access granting data message AGDm, indicative of granting access to the vehicle 1.

One advantage with this embodiment is that the access granting data message can be sent to the vehicle door lock system for e.g. unlocking a door and/or enabling ignition to a user of the vehicle.

According to some embodiments the method further the method comprises S5 sending the access granting data message AGDm to a vehicle door lock system 100 via a communication network 50 for managing access to the vehicle 1.

One advantage with this embodiment is that the access granting data message can be sent to the vehicle door lock system from a remote device such as a portable electronic device or a remote server.

According to some embodiments the first triggering event data 1TED is generated based on a first triggering event detected by a vehicle event sensor 10a,10b,10c,10d of the vehicle door lock system 100.

One advantage with this embodiment is that the vehicle door lock system can, by the vehicle event sensor, detect sound and/or a movement caused by a knocking of the portable electronic device onto the vehicle.

According to some embodiments the second triggering event data 2TED is generated based on a second triggering event detected by a portable electronic device event sensor 11a,11b,11c,11d of the portable electronic device 20.

One advantage with this embodiment is that the portable electronic device can, by the portable electronic device event sensor, detect sound and/or a movement caused by a knocking of the portable electronic device onto the vehicle.

According to some embodiments the first triggering event data 1TED and the second triggering event data 2TED are compared to determine that the first triggering event data 1TED and the second triggering event data 2TED are correlated.

According to some embodiments the first triggering event data 1TED and the second triggering event data 2TED are compared to determine a likelihood above predefined threshold percentage value to determine that the first triggering event data 1TED and the second triggering event data 2TED are correlated.

According to some embodiments comparing the first triggering event data 1TED and the second triggering event data 2TED comprising determining a likelihood that the first triggering event data 1TED and the second triggering event data 2TED are generated based on the same event. According to some embodiments, the event is the knocking of the portable electronic device 20 onto the vehicle 1.

According to some embodiments the first triggering event data 1TED and the second triggering event data 2TED are each described by functions f(1TED), f(2TED) and the likelihood L that the first triggering event data 1TED and the second triggering event data 2TED are correlated is determined by comparing the functions L {f(1TED), f(2TED)}.

According to some embodiments the likelihood L can be defined by comparing statistical data parameters by each function f(1TED), f(2TED). According to some embodiments a threshold percentage value is used for setting an allowable determination that the first triggering event data 1TED and the second triggering event data 2TED both relates to the knocking of the portable electronic device 20 onto the vehicle 1.

According to some embodiments, in accordance with a determination that the first triggering event and the second triggering event both occurs within the predetermined time period and if acceptable wireless key access information data is transferred between the portable electronic device 20 and the vehicle door lock system 100, access to the vehicle 1 is granted by enable unlocking of the door lock 5a, 5b, 5c, 5d and/or by enable the ignition of the vehicle 1 to be turned on.

According to some embodiments the first triggering event data 1TED further comprises a first triggering event sensor fingerprint data 1TESFD indicative of sensor data obtained by the vehicle event sensor 10a,10b,10c,10d and the second triggering event data 2TED further comprises a second triggering event sensor fingerprint data 2TESFD indicative of sensor data obtained by a portable electronic device event sensor 11a,11b,11c,11d, and the granting of access to the vehicle 1 is further dependent on comparing sensor fingerprint data and in accordance with a determination that the first triggering event sensor fingerprint data 1TESFD is correlated with the second triggering event sensor fingerprint data 2TESFD, grant access to the vehicle 1.

According to some embodiments any of the first triggering event sensor fingerprint data 1TESFD and/or the second triggering event sensor fingerprint data 2TESFD comprising multiple event data and multiple time stamp data.

According to some embodiments any of the first triggering event sensor fingerprint data 1TESFD and/or the second triggering event sensor fingerprint data 2TESFD comprising multiple sound data and/or multiple movement data.

One advantage with this embodiment is that triggering event sensor fingerprint data can e.g. be a sequence or pattern of knocks, or a certain knocking rhythm, or different sound or movement intensity of plural knocks which can make the knocking individual.

The fifth aspect of this disclosure shows a computer program product the fourth aspect comprising a non-transitory computer readable medium, having thereon a computer program comprising program instructions, the computer program being loadable into a processing circuitry 102a,102b,102c and configured to cause execution of the method when the computer program is run by the at least one processing circuitry 102a,102b,102c.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A vehicle door lock system (100) of a vehicle (1) for managing access to the vehicle (1), the vehicle door lock system (100) comprises:
a door lock (5a,5b,5c,5d);
a vehicle event sensor (10a,10b,10c,10d); and
a processing circuitry (102a) operatively connected to the door lock (5a,5b,5c,5d) and the vehicle event sensor (10a,10b,10c,10d), the processing circuitry (102a,102b,102c) is configured to cause the vehicle door lock system (100) to:
- generate first triggering event data (1TED), indicative of a first triggering event detected by the vehicle event sensor (10a,10b,10c,10d), caused by a knocking of an object onto the vehicle (1), at a first time (T1);
- obtain, from a portable electronic device (20), second triggering event data (2TED), indicative of a second triggering event caused by a knocking of the portable electronic device (20) onto an object, at a second time (T2);
- determine if the first triggering event and the second triggering event both occurs within a predetermined time period by comparing the first triggering event data (1TED) and the second triggering event data (2TED), and in accordance with a determination that the first triggering event and the second triggering event both occurs within the predetermined time period, grant access to the vehicle (1) by enable unlocking of the door lock (5a,5b,5c,5d).

2. A portable electronic device (20) for managing access to a vehicle (1), the portable electronic device (20) comprises:
a portable electronic device event sensor (11a,11b,11c,11d);
a processing circuitry (102b) operatively connected to the portable electronic device event sensor (11a,11b,11c,11d), the processing circuitry (102b) is configured to cause the portable electronic device (20) to:
- generate second triggering event data (2TED), indicative of a second triggering event detected by the portable electronic device event sensor (11a,11b,11c,11d), caused by a knocking of the portable electronic device (20) onto an object, at a second time (T2);
- obtain, from a vehicle door lock system (100) of a vehicle (1), first triggering event data (1TED), indicative of a first triggering event caused by a knocking of an object onto the vehicle (1) at a first time (T1);
- determine if the first triggering event and the second triggering event both occurs within a predetermined time period by comparing the first triggering event data (1TED) and the second triggering event data (2TED), and in accordance with a determination that the first triggering event and the second triggering event both occurs within the predetermined time period, grant access to the vehicle (1) by generating an access granting data message (AGDm), indicative of granting access to the vehicle (1).

3. The portable electronic device (20) according to claim 2, wherein the processing circuitry (102b) is further configured to cause the portable electronic device (20) to send the access granting data message (AGDm) to a vehicle door lock system (100) of the vehicle (1) via a communication network (50) for managing access to the vehicle (1).

4. The vehicle door lock system (100) or the portable electronic device (20) according to any of the preceding claims wherein the first triggering event data (1TED) and/or the second triggering event data (2TED) is generated by any of, or a combination of, a detection of a sound and/or a detection of a movement.

5. The vehicle door lock system (100) or the portable electronic device (20) according to any of the preceding claims wherein the vehicle event sensor (10a,10b,10c,10d) and/or the portable electronic device event sensor (11a,11b,11c,11d) is configured to detect any of a sound and/or a movement.

6. A vehicle door lock server (400) for managing access to vehicle (1), the vehicle door lock server (400) comprises:
a processing circuitry (102c) operatively connected to a vehicle door lock system (100) and a portable electronic device (20), the processing circuitry (102c) is configured to cause the vehicle door lock server (400) to:
- obtain, from the vehicle door lock system (100) of a vehicle (1), first triggering event data (1TED), indicative of a first triggering event caused by a knocking of an object onto the vehicle (1) at a first time (T1);
- obtain, from the portable electronic device (20), second triggering event data (2TED), indicative of a second triggering event caused by a knocking of the portable electronic device (20) onto the vehicle (1), at a second time (T2);
- determine if the first triggering event and the second triggering event both occurs within a predetermined time period by comparing the first triggering event data (1TED) and the second triggering event data (2TED); and in accordance with a determination that the first triggering event and the second triggering event both occurs within the predetermined time period, grant access to the vehicle (1) by generating an access granting data message (AGDm), indicative of granting access to the vehicle (1).

7. The vehicle door lock server (400) according to claim 6, wherein the processing circuitry (102c) is further configured to cause the vehicle door lock server (400) to send the access granting data message (AGDm) to a vehicle door lock system (100) of the vehicle (1) via a communication network (50) for managing access to the vehicle (1).

8. A method for managing access to the vehicle (1), the method comprising:
- (S1) obtaining, from a vehicle door lock system (100) of a vehicle (1), first triggering event data (1TED), indicative of a first triggering event caused by a knocking of an object onto the vehicle (1) at a first time (T1);
- (S2) obtaining, from a portable electronic device (20), second triggering event data (2TED), indicative of a second triggering event caused by a knocking of the portable electronic device (20) onto an object, at a second time (T2);
- (S3) determining if the first triggering event and the second triggering event both occurs within a predetermined time period by comparing the first triggering event data (1TED) and the second triggering event data (2TED); and
- (S4) in accordance with a determination that the first triggering event and the second triggering event both occurs within the predetermined time period, granting access to the vehicle (1).

9. The method according to claim 8 wherein the granting of access to the vehicle (1) comprising enabling unlocking of a door lock (5a,5b,5c,5d).

10. The method according to claim 8 wherein the granting of access to the vehicle (1) comprising generating an access granting data message (AGDm), indicative of granting access to the vehicle (1).

11. The method according to claim 10, the method further comprising:
- (S5) sending the access granting data message (AGDm) to a vehicle door lock system (100) via a communication network (50) for managing access to the vehicle (1).

12. The method according to any of the claims 8-11 wherein the first triggering event data (1TED) is generated based on a first triggering event detected by a vehicle event sensor (10a,10b,10c,10d) of the vehicle door lock system (100).

13. The method according to any of the claims 8-12 wherein the second triggering event data (2TED) is generated based on a second triggering event detected by a portable electronic device event sensor (11a,11b,11c,11d) of the portable electronic device (20).

14. The method according to any of the claims 8-13 wherein the first triggering event data (1TED) further comprises a first triggering event sensor fingerprint data (1TESFD) indicative of sensor data obtained by the vehicle event sensor (10a,10b,10c,10d) and the second triggering event data (2TED) further comprises a second triggering event sensor fingerprint data (2TESFD) indicative of sensor data obtained by a portable electronic device event sensor (11a,11b,11c,11d), and the granting of access to the vehicle (1) is further dependent on comparing sensor fingerprint data and in accordance with a determination that the first triggering event sensor fingerprint data (1TESFD) is correlated with the second triggering event sensor fingerprint data (2TESFD), grant access to the vehicle (1).

15. A computer program product (500) comprising a non-transitory computer readable medium, having thereon a computer program comprising program instructions, the computer program being loadable into a processing circuitry (102a,102b,102c) and configured to cause execution of the method according to any of claims 8 through 14 when the computer program is run by the at least one processing circuitry (102a,102b,102c).
